# EUROPEAN PATENT APPLICATION

(11) **EP 2 868 627 A1**
(43) Date of publication of application: **06.05.2015**
(21) Application number: 12879617.4
(22) Date of filing: 29.06.2012
(51) Int. Cl.: C01B 31/04, H01M 4/66, H01G 5/015

(54) **GRAPHENE FILM, PREPARATION METHOD AND APPLICATION THEREOF**

(71) Applicant: Ocean's King Lighting Science & Technology Co., Ltd, Shenzhen, Guangdong 518000 (CN); Shenzhen Ocean's King Lighting Engineering Co., Ltd., Shenzhen, Guangdong 518000 (CN)
(72) Inventor: ZHOU, Mingjie, Shenzhen Guangdong 518000 (CN); WU, Feng, Shenzhen Guangdong 518000 (CN); WANG, Yaobing, Shenzhen Guangdong 518000 (CN)
(74) Representative: Johnson, Richard Alan
(86) International application number: PCT/CN2012/077843
(87) International publication number: WO 2014/000246

(57) **Abstract**

Disclosed is a preparation method of graphene film. The method comprises the following steps: providing a clean substrate, followed by positively charged processing of the substrate surface; preparing suspension of graphene with negative charges on surface and the suspension of graphene with positive charges on surface respectively; immersing the surface-treated substrate into the suspension of graphene with negative charges on surface for 5-20 minutes, then taking the substrate out, washing, drying, and then immersing it into the suspension of graphene with positive charges on surface for 5-20 minutes, then taking the substrate out, washing, drying, so alternately repeated 10 to 50 times to obtain a graphene film precursor, and finally reducing the graphene film precursor at 500-1000°C to obtain the grapheme film. The preparation method of graphene film provided by this invention is simple, the thickness of the film is able to control easily, and the graphene film provided by this invention is light, strongly conductive, and can be used as collector of super capacitors and lithium-ion batteries.

## Description

### FIELD OF THE INVENTION

The present invention relates to the field of synthesis of new material, particularly to graphene film, preparation method and application thereof.

### BACKGROUND OF THE INVENTION

Current collectors are devices or parts used to collect electrical current. The main function is to collect current generated by active material of battery, and provide electron channel for accelerating the charge transfer and improving the Coulombic efficiency. As a current collector, it is required to have characteristics such as high conductivity, good mechanical properties, light weight and low internal resistance.

Graphene is a crystalline allotrope of carbon with 2-dimensional properties. Graphene was first produced in 2004 by Andre K. Geim at the University of Manchester in the United Kingdom. Owing to its unique structure and photoelectrical properties, graphene material has attracted considerable attention and has become research hotspot in the field of carbon material, nanotechnology, condensed matter physics and functional materials. Single-layer graphene has high electrical conductivity, thermal conductivity and low thermal expansion coefficient, and its theoretical value of specific surface area is up to 2630m²/g (A Peigney, Ch Laurent, et al. Carbon, 2001, 39, 507). As such, single-layer graphene can be used for field-effect transistor, electrode material, composite material, liquid crystal displays and sensor, etc. Graphene can be made into graphene film by some method. Due to the large specific surface area and low density of graphene, the graphene film is relatively light. Further, graphene film has excellent mechanical properties and high electrical conductivity, thus meeting the basic performance requirements of energy storage device, such as current collector.

At present, method for preparing graphene film comprises: filtration method and spin coating method. However, filtration method is time-consuming and low efficiency. Graphene film prepared by spin coating method is too thin and not uniform enough.

### SUMMARY OF THE INVENTION

In order to solve the problems, the present invention aims to provide graphene film, preparation method and application thereof. The graphene film provided by the present invention is light, strongly conductive, and can be used as current collector of supercapacitors and lithium ion batteries. Existing problems of low energy density of current energy storage device can be solved by reducing weight of collector, thus improving energy density of supercapacitors and lithium ion batteries. Preparation method is simple.

In a first aspect, the present invention provides a method for preparing graphene film, comprising:

providing clean substrate, followed by making the surface to become positively charged;

providing graphene and adding into mixed solution of strong acid, heating and refluxing at 60°C-80°C for 10-24h, drying, then obtaining negatively charged graphene; dispersing ultrasonically the negatively charged graphene in solvent to obtain suspension of negatively charged graphene;

dispersing ultrasonically graphene and cationic surfactant in solvent to obtain suspension of positively charged graphene;

immersing the surface-treated substrate into the suspension of negatively charged graphene for 5-20min, taking the substrate out and cleaning, drying; then immersing the substrate into the suspension of positively charged graphene for 5-20min, taking the substrate out and cleaning, drying; performing previous steps for 10-50 times to obtain graphene film precursor; reducing the graphene film precursor at 500°C-1000°C to obtain the graphene film.

Preferably, material of the substrate can be polypropylene (PP), polymethyl methacrylate (PMMA), polycarbonate (PC), polyethylene (PE), polyethylene terephthalate (PET) or polyethylene naphthalate (PEN).

Substrate will decompose at a high temperature in the range of 500°C-100°C, and it is easy to remove from graphene film products.

Step of cleaning the substrate can be: ultrasonically treating the substrate successively with acetone, ethanol, and redistilled water for 20min, after that, washing with large quantities of redistilled water, blow-drying with nitrogen gas.

Preferably, the step of making the surface to become positively charged comprises: immersing the substrate into aqueous solution of polyethylenimine having a concentration of 1~5g/L for 10-30min, taking the substrate out and cleaning, blow-drying with nitrogen gas.

Preferably, the mixed solution of strong acid is mixed solution consisting of concentrated sulfuric acid and concentrated nitric acid, volume ratio of concentrated sulfuric acid to concentrated nitric acid is in a range of 1~3:1.

Preferably, the step of drying is performed in a temperature range of 50°C-80°C for 12-24h, and under vacuum.

Preferably, concentration of the suspension of negatively charged graphene is in a range of 0.1-5mg/mL.

Preferably, the step of dispersing ultrasonically is performed for 1-5h.

Preferably, concentration of the suspension of positively charged graphene is in a range of 0.1-5mg/mL.

Preferably, solvent is distilled water, ethanol, methanol or isopropanol.

Preferably, the cationic surfactant is ethanolamine salt or quaternary ammonium salt.

More preferably, cationic surfactant is quaternary ammonium salt.

Preferably, ethanolamine salt is diethanolamine or triethanolamine.

Preferably, quaternary ammonium salt is 1-dodecanaminium, N,N,N-trimethyl-, chloride.

Surface-treated positively charged substrate is immersed in the suspension of negatively charged graphene. Negatively charged graphene attaches itself to the substrate by the electrostatic attractive force, and the substrate has an excess of negative charges. After washing and blow-drying, the substrate is immersed again in the suspension of positively charged graphene. Further, positively charged graphene attaches itself to the substrate by the electrostatic attractive force. After washing and blow-drying, graphene film precursor having a single-layer structure is obtained.

As such, graphene film prepared by utilizing the electrostatic attractive force has more uniform thickness, neat arrangement and high electrical conductivity.

The step of immersing the substrate into the suspension of negatively charged graphene and the step of immersing the substrate into suspension of positively charged graphene are alternately repeated for many times, so as to produce graphene film precursor having multi-layer structure. Therefore, thickness of graphene film can be controlled effectively.

Due to an excess of positive charges, the obtained graphene film precursor should be subject to reduction process at a high temperature to obtain graphene film. During the reduction process at a high temperature, substrate will decompose at a high temperature, and remove from graphene film products.

Preferably, the step of reducing the graphene film precursor comprises: placing the graphene film precursor into tube furnace; supplying inert gas at a flow rate of 50-70mL/min; elevating temperature to 500°C-1000°C at a speed of 5-10°C/min; supplying mixed gases of inert gas and hydrogen gas; reducing for 0.5-2h; lowering temperature to room temperature; cleaning with water to obtain graphene film.

Preferably, inert gas is nitrogen gas, argon gas, helium gas, or combination thereof.

Preferably, percentage of hydrogen gas is 5-10% by volume of the mixed gases of inert gas and hydrogen gas.

In a second aspect, the present invention provides a graphene film prepared by the method as set forth above. Thickness of the graphene film is in a range of 0.2-1µm.

In a third aspect, the present invention provides uses of the graphene film as a current collector of supercapacitors and lithium ion batteries. The graphene film can be used as positive current collector or negative current collector of supercapacitors and lithium ion batteries.

### BRIEF DESCRIPTION OF THE DRAWINGS

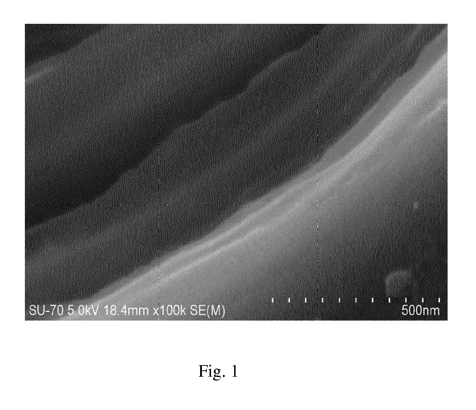

Fig. 1 is SEM image of graphene film prepared according to Example 1.

### DETAILED DESCRIPTION OF ILLUSTRATED EMBODIMENTS

The present invention will be described below in detail referring to preferred embodiments. The technical scope of the present invention is not limited to these preferred embodiments.

### Example 1

A method for preparing graphene film comprises the following steps:
(1) providing clean substrate, followed by making the surface to become positively charged: PP substrate was ultrasonically treated successively with acetone, ethanol, and redistilled water for 20min, followed by washing with large quantities of redistilled water, blow-drying with nitrogen gas. The substrate was then immersed into aqueous solution of polyethylenimine (PEI) having a concentration of 1g/L for 30min. The substrate was taken out and cleaned, blow-dried with nitrogen gas. Positively charged PP substrate was obtained.
(2) providing graphene and adding into mixed solution of concentrated sulfuric acid and concentrated nitric acid, volume ratio of concentrated sulfuric acid to concentrated nitric acid is 1:1; heating and refluxing at 60°C for 24h, drying under vacuum at 50°C for 24h, then obtaining negatively charged graphene; dispersing ultrasonically the negatively charged graphene in distilled water to obtain suspension of negatively charged graphene having a concentration of 0.1mg/mL.
(3) dispersing ultrasonically graphene and diethanolamine in distilled water to obtain suspension of positively charged graphene having a concentration of 0.1mg/mL;
(4) immersing the positively charged PP substrate treated by step (1) into the suspension of negatively charged graphene for 5min, taking the substrate out and cleaning, drying; then immersing the substrate into the suspension of positively charged graphene for 5min, taking the substrate out and cleaning, drying; performing previous steps for 50 times to obtain graphene film precursor;
(5) placing the graphene film precursor as prepared in step (4) into tube furnace, supplying argon gas at a flow rate of 50mL/min to expel air in the furnace, slowly elevating temperature to 500°C at a speed of 5°C/min; supplying mixed gases of argon gas and hydrogen gas (5 vol%); reducing for 0.5h at such temperature to decompose PP substrate; lowering temperature to room temperature; cleaning with water to obtain graphene film.

Thickness of the graphene film according to this embodiment is 1µm.

Fig. 1 is SEM image of graphene film prepared according to Example 1. It can be seen from Fig. 1 that graphene film is successfully prepared. Neat arrangement of graphene film indicates a uniform thickness.

### Example 2

A method for preparing graphene film comprises the following steps:
(1) providing clean substrate, followed by making the surface to become positively charged: PC substrate was ultrasonically treated successively with acetone, ethanol, and redistilled water for 20min, followed by washing with large quantities of redistilled water, blow-drying with nitrogen gas. The substrate was then immersed into aqueous solution of polyethylenimine (PEI) having a concentration of 1g/L for 30min. The substrate was taken out and cleaned, blow-dried with nitrogen gas. Positively charged PC substrate was obtained.
(2) providing graphene and adding into mixed solution of concentrated sulfuric acid and concentrated nitric acid, volume ratio of concentrated sulfuric acid to concentrated nitric acid is 1:1; heating and refluxing at 60°C for 24h, drying under vacuum at 50°C for 24h, then obtaining negatively charged graphene; dispersing ultrasonically the negatively charged graphene in distilled water to obtain suspension of negatively charged graphene having a concentration of 0.1mg/mL.
(3) dispersing ultrasonically graphene and diethanolamine in distilled water to obtain suspension of positively charged graphene having a concentration of 0.1mg/mL;
(4) immersing the positively charged PC substrate treated by step (1) into the suspension of negatively charged graphene for 5min, taking the substrate out and cleaning, drying; then immersing the substrate into the suspension of positively charged graphene for 5min, taking the substrate out and cleaning, drying; performing previous steps for 30 times to obtain graphene film precursor;
(5) placing the graphene film precursor as prepared in step (4) into tube furnace, supplying nitrogen gas at a flow rate of 50mL/min to expel air in the furnace, slowly elevating temperature to 500°C at a speed of 5°C/min; supplying mixed gases of nitrogen gas and hydrogen gas (5 vol%); reducing for 0.5h at such temperature to decompose PC substrate; lowering temperature to room temperature; cleaning with water to obtain graphene film.

Thickness of the graphene film according to this embodiment is 0.6µm.

### Example 3

A method for preparing graphene film comprises the following steps:
(1) providing clean substrate, followed by making the surface to become positively charged: PMMA substrate was ultrasonically treated successively with acetone, ethanol, and redistilled water for 20min, followed by washing with large quantities of redistilled water, blow-drying with nitrogen gas. The substrate was then immersed into aqueous solution of polyethylenimine (PEI) having a concentration of 3g/L for 20min. The substrate was taken out and cleaned, blow-dried with nitrogen gas. Positively charged PMMA substrate was obtained.
(2) providing graphene and adding into mixed solution of concentrated sulfuric acid and concentrated nitric acid, volume ratio of concentrated sulfuric acid to concentrated nitric acid is 2:1; heating and refluxing at 70°C for 18h, drying under vacuum at 60°C for 18h, then obtaining negatively charged graphene; dispersing ultrasonically the negatively charged graphene in distilled water to obtain suspension of negatively charged graphene having a concentration of 2mg/mL.
(3) dispersing ultrasonically graphene and diethanolamine in distilled water to obtain suspension of positively charged graphene having a concentration of 2mg/mL;
(4) immersing the positively charged PMMA substrate treated by step (1) into the suspension of negatively charged graphene for 10min, taking the substrate out and cleaning, drying; then immersing the substrate into the suspension of positively charged graphene for 10min, taking the substrate out and cleaning, drying; performing previous steps for 20 times to obtain graphene film precursor;
(5) placing the graphene film precursor as prepared in step (4) into tube furnace, supplying helium gas at a flow rate of 60mL/min to expel air in the furnace, slowly elevating temperature to 800°C at a speed of 5°C/min; supplying mixed gases of helium gas and hydrogen gas (10 vol%); reducing for 1h at such temperature to decompose PMMA substrate; lowering temperature to room temperature; cleaning with water to obtain graphene film.

Thickness of the graphene film according to this embodiment is 0.4µm.

### Example 4

A method for preparing graphene film comprises the following steps:
(1) providing clean substrate, followed by making the surface to become positively charged: PET substrate was ultrasonically treated successively with acetone, ethanol, and redistilled water for 20min, followed by washing with large quantities of redistilled water, blow-drying with nitrogen gas. The substrate was then immersed into aqueous solution of polyethylenimine (PEI) having a concentration of 5g/L for 10min. The substrate was taken out and cleaned, blow-dried with nitrogen gas. Positively charged PET substrate was obtained.
(2) providing graphene and adding into mixed solution of concentrated sulfuric acid and concentrated nitric acid, volume ratio of concentrated sulfuric acid to concentrated nitric acid is 3:1; heating and refluxing at 80°C for 10h, drying under vacuum at 80°C for 12h, then obtaining negatively charged graphene; dispersing ultrasonically the negatively charged graphene in distilled water to obtain suspension of negatively charged graphene having a concentration of 5mg/mL.
(3) dispersing ultrasonically graphene and diethanolamine in distilled water to obtain suspension of positively charged graphene having a concentration of 5mg/mL;
(4) immersing the positively charged PET substrate treated by step (1) into the suspension of negatively charged graphene for 20min, taking the substrate out and cleaning, drying; then immersing the substrate into the suspension of positively charged graphene for 20min, taking the substrate out and cleaning, drying; performing previous steps for 10 times to obtain graphene film precursor;
(5) placing the graphene film precursor as prepared in step (4) into tube furnace, supplying argon gas at a flow rate of 70mL/min to expel air in the furnace, slowly elevating temperature to 1000°C at a speed of 5°C/min; supplying mixed gases of argon gas and hydrogen gas (8 vol%); reducing for 2h at such temperature to decompose PET substrate; lowering temperature to room temperature; cleaning with water to obtain graphene film.

Thickness of the graphene film according to this embodiment is 0.2µm.

Conductivity of graphene film prepared according to Example 1-4 was determined by a resistivity meter with four-point probe. Test results are shown in Tab. 1.

**Tab. 1 Conductivity of graphene film prepared according to Example 1-4**

| Example | 1 | 2 | 3 | 4 |
|---|---|---|---|---|
| Conductivity 10⁴S/m | 1.54 | 1.46 | 1.28 | 1.13 |

The graphene film provided by this invention is of good mechanical properties, uniform thickness, strong electrical conductivity, light weight, high stability and corrosion resistance. The graphene film can be used as current collector of supercapacitors and lithium-ion batteries. The graphene film can reduce the weight of the energy storage device; greatly increase the energy density of the energy storage device, and improve its life.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the invention.

## Claims

1. A method for preparing graphene film, comprising:
providing clean substrate, followed by making the surface to become positively charged;
providing graphene and adding into mixed solution of strong acid, heating and refluxing at 60°C-80°C for 10-24h, drying, then obtaining negatively charged graphene; dispersing ultrasonically the negatively charged graphene in solvent to obtain suspension of negatively charged graphene;
dispersing ultrasonically graphene and cationic surfactant in solvent to obtain suspension of positively charged graphene;

2. The method for preparing graphene film according to claim 1, wherein the substrate is polypropylene, polymethyl methacrylate, polycarbonate, polyethylene, polyethylene terephthalate or polyethylene naphthalate.

3. The method for preparing graphene film according to claim 1, wherein the step of making the surface to become positively charged comprises: immersing the substrate into aqueous solution of polyethylenimine having a concentration of 1~5g/L for 10-30min, taking the substrate out and cleaning, blow-drying with nitrogen gas.

4. The method for preparing graphene film according to claim 1, wherein the mixed solution of strong acid is mixed solution consisting of concentrated sulfuric acid and concentrated nitric acid; volume ratio of concentrated sulfuric acid to concentrated nitric acid is in a range of 1~3:1.

5. The method for preparing graphene film according to claim 1, wherein concentration of the suspension of negatively charged graphene is in a range of 0.1-5mg/mL; concentration of the suspension of positively charged graphene is in a range of 0.1-5mg/mL.

6. The method for preparing graphene film according to claim 1, wherein the solvent is distilled water, ethanol, methanol or isopropanol; the cationic surfactant is ethanolamine salt or quaternary ammonium salt.

7. The method for preparing graphene film according to claim 1, wherein the step of reducing the graphene film precursor at 500°C-1000°C comprises: placing the graphene film precursor into tube furnace; supplying inert gas at a flow rate of 50-70mL/min; elevating temperature to 500°C-1000°C at a speed of 5-10°C/min; supplying mixed gases of inert gas and hydrogen gas; reducing for 0.5-2h; lowering temperature to room temperature; cleaning with water to obtain graphene film.

8. The method for preparing graphene film according to claim 7, wherein the inert gas is nitrogen gas, argon gas, helium gas, or combination thereof.

9. A graphene film prepared by the method as claimed in any one of the claims from 1-8, wherein thickness of the graphene film is in a range of 0.2-1µm.

10. Uses of the graphene film of claim 9 as a current collector of supercapacitors and lithium ion batteries.
